# EUROPEAN PATENT APPLICATION

(11) **EP 4 597 150 A1**
(43) Date of publication of application: **06.08.2025**
(21) Application number: 22960460.8
(22) Date of filing: 30.09.2022
(51) Int. Cl.: G01S 5/02, H04W 64/00

(54) **POSITIONING METHOD AND APPARATUS**

(71) Applicant: Beijing Xiaomi Mobile Software Co., Ltd., Beijing 100085 (CN)
(72) Inventor: SHEN, Yang, Beijing 100085 (CN)
(74) Representative: Zimmermann, Tankred Klaus
(86) International application number: PCT/CN2022/123663
(87) International publication number: WO 2024/065856

(57) **Abstract**

**The** present disclosure relates to the technical field of communications, and provides a positioning method and apparatus, a device and a storage medium. The method comprises: receiving a first ranging or sidelink positioning request, wherein the first ranging or sidelink positioning request comprises identifiers of a first UE and a second UE and ranging or sidelink positioning parameters; discovering the second UE according to the identifier of the second UE; and, after a privacy check succeeds, starting ranging or sidelink positioning for the second UE according to the first ranging or sidelink positioning request. **The** present disclosure provides a processing method for the situation of "positioning", so that when a sidelink positioning client UE performs ranging or sidelink positioning, a privacy check is carried out on the UE, thereby improving positioning security.

## Description

### TECHNICAL FIELD

The disclosure relates to the field of communication technologies, and in particular, to a positioning method, apparatus, device and storage medium.

### BACKGROUND

Sidelink (SL) positioning refers to the use of a direct communication interface (PC5 interface) to position UE and obtain absolute position, relative position, or ranging information. Ranging refers to determining the distance between two or more User Equipment (UE) and/or the direction of one UE relative to another UE through the PC5 interface. The SL positioning client UE can initiate Ranging/SL Positioning based on PC5, but it lacks privacy checking for the UE during Ranging/SL Positioning, resulting in lower positioning security.

### SUMMARY

The present disclosure provides a positioning method, apparatus, device and storage medium, so that the SL positioning client UE performs privacy checking for the UE during Ranging/SL Positioning, thereby improving the security of positioning.

Embodiments of an aspect of the present disclosure provide a positioning method, applied to first user equipment (UE). The method includes:
receiving a first Ranging/SL Positioning request, wherein the first Ranging/SL Positioning request includes an identifier of the first UE, an identifier of a second UE and a Ranging/SL Positioning parameter;
discovering the second UE based on the identifier of the second UE; and
initiating Ranging/SL Positioning to the second UE based on the first Ranging/SL Positioning request, after passing privacy checking.

Optionally, in an embodiment of the present disclosure, the method further includes:
in case that the first UE is a target UE, checking whether a target UE privacy event is triggered;
if triggered, determining that the first Ranging/SL Positioning request does not pass target UE privacy checking;
if not triggered, determining that the first Ranging/SL Positioning request passes the target UE privacy checking.

Optionally, in an embodiment of the present disclosure, the method further includes:
feeding back a privacy checking result corresponding to the target UE privacy checking to the second UE.

Optionally, in an embodiment of the present disclosure, after determining that the first Ranging/SL Positioning request passes the target UE privacy checking, the method further includes:
initiating a reference UE privacy checking for the first Ranging/SL Positioning request, wherein if the first Ranging/SL Positioning request passes both the target UE privacy checking and the reference UE privacy checking, determining passing the privacy checking, and if the first Ranging/SL Positioning request does not pass any of the target UE privacy checking or the reference UE privacy checking, determining not passing the privacy checking.

Optionally, in an embodiment of the present disclosure, the method further includes:
in case that the first UE is a reference UE, sending a second Ranging/SL Positioning request to the second UE;
receiving a privacy checking result fed back by the second UE;
if the privacy checking result shows that a target UE privacy event for the second Ranging/SL Positioning request is triggered, determining not passing the privacy checking;
if the privacy checking result shows that a target UE privacy event for the second Ranging/SL Positioning request is not triggered, determining passing the privacy checking.

Optionally, in an embodiment of the present disclosure, the method further includes:
if not passing the privacy checking, rejecting the first Ranging/SL Positioning request.

Optionally, in an embodiment of the present disclosure, before sending the second Ranging/SL Positioning request to the second UE, the method further includes:
checking whether a reference UE privacy event for the first Ranging/SL Positioning request is triggered, and determining not passing the privacy checking in case that the reference UE privacy event is triggered.

Optionally, in an embodiment of the present disclosure, the target UE privacy event includes at least one of:
whether a UE is allowed to perform Ranging/SL Positioning as a SL reference UE;
whether a UE is allowed to perform Ranging/SL Positioning as a SL positioning server UE;
whether a UE is allowed to request a Ranging/SL Positioning result to the target UE as a SL positioning client UE.

Optionally, in an embodiment of the present disclosure, the reference UE privacy event includes at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

Optionally, in an embodiment of the present disclosure, the method further includes:
determining a SL positioning server UE through negotiation with the second UE.

Optionally, in an embodiment of the present disclosure, determining the SL positioning server UE through negotiation with the second UE includes:
if the first UE or the second UE supports at least one SL positioning server function, determining the first UE or the second UE as the SL positioning server UE;
if neither the first UE nor the second UE supports any SL positioning server function, selecting a device other than the first UE and the second UE as the SL positioning server UE.

Optionally, in an embodiment of the present disclosure, selecting the device other than the first UE and the second UE as the SL positioning server UE includes:
determining at least one candidate SL positioning server UE;
obtaining a positioning server privacy event for the at least one candidate SL positioning server UE;
selecting the SL positioning server UE from the at least one candidate SL positioning server UE based on the positioning server privacy event for the at least one candidate SL positioning server UE.

Optionally, the SL positioning server function includes at least one of:
coordination and scheduling of resources required for Ranging/SL Positioning;
determining types and a numeric count of Ranging/SL Positioning methods;
calculating a Ranging/SL Positioning result.

Optionally, the positioning server privacy event includes at least one of:
whether a UE is allowed to perform Ranging/SL Positioning as the SL positioning server UE.

Embodiments of another aspect of the present disclosure provide a positioning method, applied to a second UE. The method includes:
receiving a first Ranging/SL Positioning request, wherein the first Ranging/SL Positioning request includes an identifier of a first UE, an identifier of the second UE and a Ranging/SL Positioning parameter;
discovering the first UE based on the identifier of the first UE; and
initiating Ranging/SL Positioning to the first UE based on the first Ranging/SL Positioning request, after passing privacy checking.

Optionally, in an embodiment of the present disclosure, the method further includes:
in case that the second UE is a target UE, checking whether a target UE privacy event is triggered;
if triggered, determining that the first Ranging/SL Positioning request does not pass target UE privacy checking;
if not triggered, determining that the first Ranging/SL Positioning request passes the target UE privacy checking.

Optionally, in an embodiment of the present disclosure, the method further includes:
feeding back a privacy checking result corresponding to the target UE privacy checking to the first UE.

Optionally, in an embodiment of the present disclosure, after determining that the first Ranging/SL Positioning request passes the target UE privacy checking, the method further includes:
initiating a reference UE privacy checking for the first Ranging/SL Positioning request, wherein if the first Ranging/SL Positioning request passes both the target UE privacy checking and the reference UE privacy checking, determining passing the privacy checking, and if the first Ranging/SL Positioning request does not pass any of the target UE privacy checking or the reference UE privacy checking, determining not passing the privacy checking.

Optionally, in an embodiment of the present disclosure, the method further includes:
in case that the second UE is a reference UE, sending a second Ranging/SL Positioning request to the first UE;
receiving a privacy checking result fed back by the first UE;
if the privacy checking result shows that a target UE privacy event for the second Ranging/SL Positioning request is triggered, determining not passing the privacy checking;
if the privacy checking result shows that a target UE privacy event for the second Ranging/SL Positioning request is not triggered, determining passing the privacy checking.

Optionally, in an embodiment of the present disclosure, the method further includes:
if not passing the privacy checking, rejecting the first Ranging/SL Positioning request.

Optionally, in an embodiment of the present disclosure, before sending the second Ranging/SL Positioning request to the first UE, the method further includes:
checking whether a reference UE privacy event for the first Ranging/SL Positioning request is triggered, and determining not passing the privacy checking in case that the reference UE privacy event is triggered.

Optionally, in an embodiment of the present disclosure, the target UE privacy event includes at least one of:
whether a UE is allowed to perform Ranging/SL Positioning as a SL reference UE;
whether a UE is allowed to perform Ranging/SL Positioning as a SL positioning server UE;
whether a UE is allowed to request a Ranging/SL Positioning result to the target UE as a SL positioning client UE.

Optionally, in an embodiment of the present disclosure, the reference UE privacy event includes at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

Optionally, in an embodiment of the present disclosure, the method further includes:
determining a SL positioning server UE through negotiation with the first UE.

Optionally, in an embodiment of the present disclosure, determining the SL positioning server UE through negotiation with the first UE includes:
if the first UE or the second UE supports at least one SL positioning server function, determining the first UE or the second UE as the SL positioning server UE;
if neither the first UE nor the second UE supports any SL positioning server function, selecting a device other than the first UE and the second UE as the SL positioning server UE.

Optionally, in an embodiment of the present disclosure, selecting the device other than the first UE and the second UE as the SL positioning server UE includes:
determining at least one candidate SL positioning server UE;
obtaining a positioning server privacy event for the at least one candidate SL positioning server UE;
selecting the SL positioning server UE from the at least one candidate SL positioning server UE based on the positioning server privacy event for the at least one candidate SL positioning server UE.

Optionally, in an embodiment of the present disclosure, the SL positioning server function includes at least one of:
coordination and scheduling of resources required for Ranging/SL Positioning;
determining types and a numeric count of Ranging/SL Positioning methods;
calculating a Ranging/SL Positioning result.

Optionally, in an embodiment of the present disclosure, the positioning server privacy event includes at least one of:
whether a UE is allowed to perform Ranging/SL Positioning as the SL positioning server UE.

Embodiments of yet another aspect of the present disclosure provide a positioning device. The device is arranged on a first UE side, and includes:
a transceiver module, configured to receive a first Ranging/SL Positioning request, wherein the first Ranging/SL Positioning request includes an identifier of the first UE, an identifier of a second UE, and a Ranging/SL Positioning parameter;
a processing module, configured to discover the second UE based on the identifier of the second UE;
the processing module is further configured to initiate Ranging/SL Positioning to the second UE based on the first Ranging/SL Positioning request, after passing privacy checking.

Embodiments of still yet aspect of the present disclosure provide a positioning device. The device is arranged on a second UE side, and includes:
a transceiver module, configured to receive a first Ranging/SL Positioning request, wherein the first Ranging/SL Positioning request includes an identifier of a first UE, an identifier of the second UE, and a Ranging/SL Positioning parameter;
a processing module, configured to discover the first UE based on the identifier of the first UE;
the processing module is further configured to initiate Ranging/SL Positioning to the first UE based on the first Ranging/SL Positioning request, after passing privacy checking.

Optionally, in an embodiment of the present disclosure, the transceiver module is further configured to:
feed back a privacy checking result corresponding to a target UE privacy checking to the first UE.

Embodiments of still yet another aspect of the present disclosure provide a first UE. The first UE includes a processor and a memory. The memory is stored with a computer program. The processor is configured to execute the computer program stored in the memory, so as to cause the first UE to implement the method described in the embodiments of one aspect.

Embodiments of still yet another aspect of the present disclosure provide a second UE. The second UE includes a processor and a memory. The memory is stored with a computer program. The processor is configured to execute the computer program stored in the memory, so as to cause the second UE to implement the method described in the embodiments of one aspect.

Embodiments of still yet another aspect of the present disclosure provide a positioning system. The system includes:
a first UE, configured to perform the method proposed in the embodiments of an aspect; and
a second UE, configured to perform the method proposed in the embodiments of another aspect.

Embodiments of still yet another aspect of the present disclosure provide a communication device, including a processor and an interface circuit;
the interface circuit is configured to receive code instructions and transmit the code instructions to the processor;
the processor is configured to run the code instructions to implement the method proposed in the embodiments of an aspect.

Embodiments of the present disclosure provide a computer readable storage medium, configured to store instructions, which when executed, cause the method proposed in the embodiments of an aspect to be implemented.

In summary, in embodiments of the present disclosure, the first Ranging/SL Positioning request is received, wherein the first Ranging/SL Positioning request includes the identifier of the first UE, the identifier of the second UE and the Ranging/SL Positioning parameter; the second UE is discovered based on its identifier; and after passing the privacy checking, Ranging/SL Positioning is initiated to the second UE based on the first Ranging/SL Positioning request. In embodiments of the present disclosure, the SL positioning client UE performs privacy checking on the UE during Ranging/SL Positioning, thereby improving the security of positioning. This disclosure provides a processing method for a situation of "positioning", so that the SL positioning client UE can perform privacy checking on the UE during Ranging/SL Positioning, thereby improving the security of positioning.

### BRIEF DESCRIPTION OF THE DRAWINGS

The above and/or additional aspects and advantages of the present disclosure will become apparent and easily understood from the following description of the embodiments in conjunction with the accompanying drawings.
Fig. 1 is a schematic diagram of a UE providing ranging services provided in an embodiment of the present disclosure.
Fig. 2 is a schematic diagram of an interaction of a PC5 based Ranging/SL Positioning initiated by a SL positioning client UE provided in an embodiment of the present disclosure.
Fig. 3 is a schematic flowchart of a positioning method provided in an embodiment of the present disclosure.
Fig. 4 is a schematic flowchart of a positioning method provided in still yet another embodiment of the present disclosure.
Fig. 5 is a schematic flowchart of a positioning method provided in still yet another embodiment of the present disclosure.
Fig. 6 is a schematic flowchart of a positioning method provided in still yet another embodiment of the present disclosure.
Fig. 7 is a schematic diagram of interaction of a positioning method provided in an embodiment of the present disclosure.
Fig. 8 is a schematic flowchart of a positioning method provided in still yet another embodiment of the present disclosure.
Fig. 9 is a schematic flowchart of a positioning method provided in still yet another embodiment of the present disclosure.
Fig. 10 is a schematic flowchart of a positioning method provided in still yet another embodiment of the present disclosure.
Fig. 11 is a schematic flowchart of a positioning method provided in still yet another embodiment of the present disclosure.
Fig. 12 is a block diagram of a positioning device provided in an embodiment of the present disclosure.
Fig. 13 is a block diagram of a positioning device provided in another embodiment of the present disclosure.
Fig. 14 is a block diagram of a positioning system provided in an embodiment of the present disclosure.
Fig. 15 is a block diagram of a terminal device provided in an embodiment of the present disclosure.
Fig. 16 is a block diagram of a network side device provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although various information may be described using terms such as first, second, third, etc. in this disclosure, such information should not be limited to these terms. These terms are only used to distinguish information for the same type from each other. For example, without departing from the scope of this disclosure, the first information can also be referred to as the second information, and similarly, the second information can also be referred to as the first information. Depending on the context, the word "if" used here can be interpreted as "when......" or "in case that... ..." or "in response to determining ... ...".

The network elements or network functions involved in embodiments of the present disclosure can be implemented as independent hardware devices or by software in the hardware devices, which is not limited in the embodiments of the present disclosure.

Sidelink (SL) positioning refers to locating UE by use of a direct communication interface (PC5 interface) to obtain absolute location, relative location, or ranging information. Ranging refers to determining the distance between two or more User Equipment (UE) and/or the direction of one UE relative to another UE through the PC5 interface. The SL positioning client UE can initiate Ranging/SL Positioning based on PC5, but it lacks privacy checking for the UE during the Ranging/SL Positioning, resulting in low security of positioning.

In an embodiment of the present disclosure, the UE may be a terminal device. The terminal device may refer to a device that provides voice and/or data connectivity to users. The terminal device can communicate with one or more core networks via a Radio Access Network (RAN), and can be an IoT terminal such as a sensor device, a mobile phone (also known as "cellular" phone), and a computer with an IoT terminal. For example, it can be a fixed, portable, pocket sized, handheld, computer built-in, or vehicle mounted device, for example, a station (STA), a subscriber unit, a subscriber station, a mobile station, a mobile, a remote station, an access point, a remote terminal, an access terminal, a user terminal, or a user agent. Alternatively, the terminal device can also be an unmanned aerial vehicle device. Alternatively, the terminal device can also be a vehicle mounted device, such as a wireless communication enabled onboard computer or a wireless terminal connected to an external onboard computer. Alternatively, the terminal device can also be a roadside device, such as a street lamp, a traffic light, or other roadside devices with wireless communication capabilities.

Positioning is a functionality that can detect geographic location and optionally, velocity (of e.g. a mobile terminal). A target UE refers to a UE that measures its distance, direction, and/or location using SL with the support of one or more SL reference UEs in ranging based services and SL positioning.

The SL reference UE refers to a UE that supports positioning of the target UE. For example, the SL reference UE can provide positioning related information by sending and/or receiving reference signals for positioning using SL.

The SL reference UE can also be understood as "anchor UE", which refers to the UE that supports Ranging/SL Positioning between the SL reference UE and the target UE through PC5 when direct Ranging/SL Positioning cannot be supported between the SL reference UE and the target UE. The anchor UE can derive the Ranging/SL Positioning result between the target UE and the SL reference UE by determining the measurement/result of Ranging/SL Positioning between the assistant UE and the SL reference UE, as well as the measurement/result of Ranging/SL Positioning between the assistant UE and the target UE.

A located UE refers to a SL reference UE whose location is known or can be known using the User to Network Interface Universal (Uu) based positioning. The located UE can be used to determine the location of the target UE using SL positioning.

A SL positioning server UE refers to a UE that provides location calculation. The SL positioning server UE is used to provide SL positioning and ranging based service. The SL positioning server UE can interact with other UEs over PC5 as necessary to calculate the location of the target UE. If the target UE or SL reference UE supports location calculation, the target UE or SL reference UE can act as a SL positioning server UE.

A SL positioning client UE is a third-party UE other than the SL reference UE and the target UE. The SL positioning client UE can initiate a Ranging/SL Positioning service request on behalf of an application residing on it. The SL positioning client UE does not have to support the Ranging/SL Positioning capability, but communication between the SL positioning client UE and the SL reference UE/target UE has to be established, either via PC5 or via 5GC (5G core network), for the transmission of the service request and the result.

Network-assisted operation can be carried out with the involvement of 5GC NFs for ranging or sidechain positioning operations, used for service request handling and result calculation.

Relative position refers to an estimate of the UE position relative to other network elements or relative to other UEs.

An application layer identity (ID) refers to an identifier identifying a ranging/SL positioning-enabled UE within the context of a specific application, used by the SL positioning client UE to identify the target UE and SL reference UE in the service request.

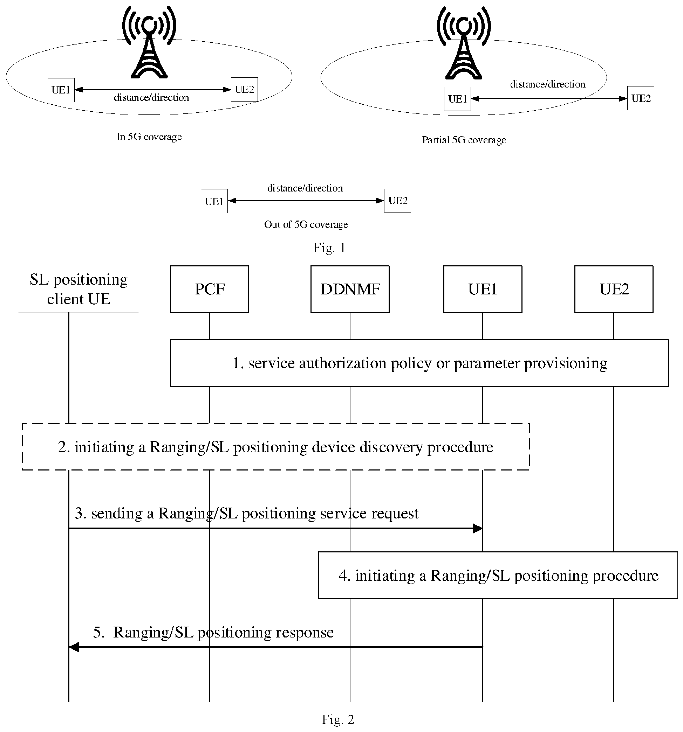

In an embodiment of the present disclosure, Fig. 1 is a schematic diagram of a UE providing ranging services provided in an embodiment of the present disclosure. As shown in Fig. 1, regardless of whether there is 5G coverage, the UE can support the ranging and SL positioning service. If the licensed band is used for ranging, the UE is fully under operator control.

Optionally, in an embodiment of the present disclosure, as shown in Fig. 1, a Ranging/SL Positioning service request can be initiated by a UE, which may be one of two UEs subject to Ranging/SL Positioning (i.e. UE1 and UE2), or a SL positioning client UE. Details are as follows.

When the service request is initiated by the upper layer of UE1/UE2, UE1/UE2 can trigger the Ranging/SL Positioning procedure to the other UE directly.

When the service request is initiated by the SL positioning client UE, the communication between the SL positioning client UE and UE1/UE2 for transmitting the service request and the result reporting can be over PC5 or Uu.

If a third UE is in proximity of UE1/UE2, the service request and the result reporting can be transmitted over PC5. Otherwise, the service request and the result reporting are transmitted over Uu, that is, through the network.

UE-only operation can be applied to all the above cases, which refers to Ranging/SL Positioning operations, where service request handling and result calculation are performed by the UEs. For UE only operation, communication among UEs can be conducted over PC5.

Optionally, in an embodiment of the present disclosure, Fig. 2 is a schematic diagram of an interaction of a PC5 based Ranging/SL Positioning initiated by a SL positioning client UE provided in an embodiment of the present disclosure. As shown in Fig.2, assuming that UE1 and UE2 are capable of handling Ranging/SL Positioning measurement and result calculation, when the SL positioning client UE is in proximity of UE1/UE2, the PC5 based Ranging/SL Positioning process initiated by the SL positioning client UE includes the following steps.

Step 1, service authorization policy or parameters are provisioned to the Policy Control Function (PCF), Digital Data Network Management Function (DDNMF), UE1, and UE2.

Step 2, the SL positioning client UE initiates the Ranging/SL Positioning device discovery procedure to discover either UE1 or UE2, and successfully discovers one of them (e.g. UE1 or UE2). In Fig. 2, UE1 represents the UE to which the SL positioning client UE decides to send a service request.

In a possible implementation, device discovery follows the device discovery procedure of vehicle to everything (V2X) or proximity service (ProSe) or the Ranging/SL Positioning device discovery procedure.

When at least one of the following situations exists, step 2 can be skipped and subsequent steps can be executed directly:
there is existing communication between the SL positioning client UE and UE1;
the SL positioning client UE and UE1 are the same UE, meaning that the service request is initiated from the upper layer of UE1.

Step 3, the SL positioning client UE sends the Ranging/SL Positioning service request to UE1, where the Ranging/SL Positioning service request includes but is not limited to the application layer IDs of UE1 and UE2, result content (distance, angle, or both), required quality of service (QoS), etc.

Step 4, UE1 initiates a Ranging/SL Positioning procedure to UE2 to trigger measurement and result calculation. The application layer IDs of UE1 and UE2 are used for communication between UE1 and UE2 over PC5. Meanwhile, the Ranging/SL Positioning procedure includes Ranging/SL Positioning discovery and service operations. Whether DDNMK is involved is determined by the solution developed under KI#3.

Step 5, UE1 sends the Ranging/SL Positioning result of UE1 and UE2 to the SL positioning client UE in the Ranging/SL Positioning response.

When the SL positioning client UE and UE1 are the same UE, that is, the service request is initiated from the upper layer of UE1, only steps 1 and 4 are required.

It is easy to understand that the above procedure lacks privacy checking for UE1 and UE2. In addition, if neither UE1 nor UE2 can support the SL positioning server functionalities, the involvement of the SL positioning server UE is necessary for Ranging/SL Positioning, but the above procedure lacks the involvement of the SL positioning server UE.

The following provides a detailed description of a positioning method, apparatus, device, and storage medium provided in embodiments of the present disclosure with reference to the accompanying drawings.

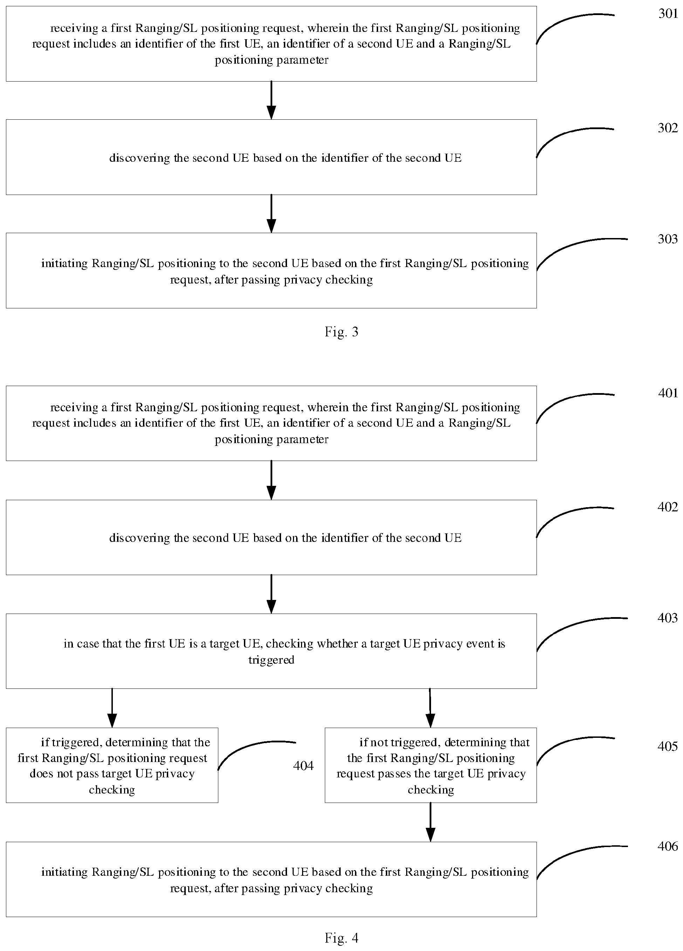

Fig. 3 is a schematic flowchart of a positioning method provided in an embodiment of the present disclosure. The method is applied to a first UE, and as shown in Fig. 3, the method may include the following steps:
Step 301, receiving a first Ranging/SL Positioning request, wherein the first Ranging/SL Positioning request includes an identifier of the first UE, an identifier of a second UE and a Ranging/SL Positioning parameter;
Step 302, discovering the second UE based on the identifier of the second UE;
Step 303, initiating Ranging/SL Positioning to the second UE based on the first Ranging/SL Positioning request, after passing privacy checking.

In an embodiment of the present disclosure, the first UE and the second UE may be a target UE and a reference UE respectively. When the first UE is the target UE, the second UE is the reference UE. When the first UE is the reference UE, the second UE is the target UE.

Optionally, in an embodiment of the present disclosure, the reference UE may be a SL reference UE. When the first UE is the target UE, the second UE is the SL reference UE. When the first UE is the SL reference UE, the second UE is the target UE.

In summary, in embodiments of the present disclosure, the first Ranging/SL Positioning request is received, wherein the first Ranging/SL Positioning request includes the identifier of the first UE, the identifier of the second UE and the Ranging/SL Positioning parameter; the second UE is discovered based on its identifier; and after passing the privacy checking, Ranging/SL Positioning is initiated to the second UE based on the first Ranging/SL Positioning request. In embodiments of the present disclosure, enabling the first UE to initiate Ranging/SL Positioning to the second UE based on the first Ranging/SL Positioning request after passing privacy checking can enable the SL positioning client UE to perform privacy checking on the UE during Ranging/SL Positioning, thereby improving the security of positioning.

Fig. 4 is a schematic flowchart of a positioning method provided in an embodiment of the present disclosure. The method is applied to a first UE, and as shown in Fig. 4, the method may include the following steps:
Step 401, receiving a first Ranging/SL Positioning request, wherein the first Ranging/SL Positioning request includes an identifier of the first UE, an identifier of a second UE and a Ranging/SL Positioning parameter;
Step 402, discovering the second UE based on the identifier of the second UE;
Step 403, in case that the first UE is a target UE, checking whether a target UE privacy event is triggered;
Step 404, if triggered, determining that the first Ranging/SL Positioning request does not pass target UE privacy checking;
Step 405, if not triggered, determining that the first Ranging/SL Positioning request passes the target UE privacy checking;
Step 406, initiating Ranging/SL Positioning to the second UE based on the first Ranging/SL Positioning request, after passing privacy checking.

For example, in an embodiment of the present disclosure, the first UE is a target UE, and the second UE may be a reference UE. Specifically, the second UE may be a SL reference UE.

In an embodiment of the present disclosure, after receiving the first Ranging/SL Positioning request, the first UE needs to perform target UE privacy checking on the first Ranging/SL Positioning request before initiating Ranging/SL Positioning to the second UE based on the first Ranging/SL Positioning request, and may also need to perform a reference UE privacy checking on the first Ranging/SL Positioning request.

Optionally, in an embodiment of the present disclosure, when the first UE needs to perform the target UE privacy checking and the reference UE privacy checking on the first Ranging/SL Positioning request, the first UE may initiate the reference UE privacy checking on the first Ranging/SL Positioning request after determining that the first Ranging/SL Positioning request has passed the target UE privacy checking. If the first Ranging/SL Positioning request passes both the target UE privacy checking and the reference UE privacy checking, the privacy checking is determined as passed. If the first Ranging/SL Positioning request does not pass any of the target UE privacy checking or the reference UE privacy checking, the privacy checking is determined as not passed.

Optionally, in an embodiment of the present disclosure, if not passing the privacy checking, the first UE rejects the first Ranging/SL Positioning request. Specifically, when only the target UE privacy checking is required for the first Ranging/SL Positioning request, if the first Ranging/SL Positioning request fails to pass the target UE privacy checking, the first UE rejects the first Ranging/SL Positioning request. When it is necessary to perform target UE privacy checking and reference UE privacy checking on the first Ranging/SL Positioning request, if the first Ranging/SL Positioning request does not pass any of the target UE privacy checking or the reference UE privacy checking, the first UE rejects the first Ranging/SL Positioning request.

For example, in an embodiment of the present disclosure, after the first UE performs the target UE privacy checking on the first Ranging/SL Positioning request, the first UE can feedback a privacy checking result corresponding to the target UE privacy checking to the second UE.

In an embodiment of the present disclosure, the reference UE privacy event includes at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

Optionally, in an embodiment of the present disclosure, the reference UE privacy event may be stored and maintained in the reference UE, specifically, may be stored and maintained in the SL reference UE.

In an embodiment of the present disclosure, the target UE privacy event includes at least one of:
whether a UE is allowed to perform Ranging/SL Positioning as a SL reference UE;
whether a UE is allowed to perform Ranging/SL Positioning as a SL positioning server UE; or
whether a UE is allowed to request a Ranging/SL Positioning result to the target UE as a SL positioning client UE.

Optionally, in an embodiment of the present disclosure, the target UE privacy event may be stored and maintained in the target UE.

In summary, in embodiments of the present disclosure, the first Ranging/SL Positioning request is received, wherein the first Ranging/SL Positioning request includes the identifiers of the first UE and the second UE and the Ranging/SL Positioning parameter; if the first UE is the target UE, it is checked whether the target UE privacy event is triggered; if triggered, it is determined that the first Ranging/SL Positioning request does not pass the target UE privacy checking; if not triggered, it is determined that the first Ranging/SL Positioning request passes the target UE privacy checking; after passing the privacy checking, Ranging/SL Positioning is initiated to the second UE based on the first Ranging/SL Positioning request. In embodiments of the present disclosure, enabling the first UE to initiate Ranging/SL Positioning to the second UE based on the first Ranging/SL Positioning request after passing privacy checking can enable the SL positioning client UE to perform privacy checking on the UE during Ranging/SL Positioning, thereby improving the security of positioning.

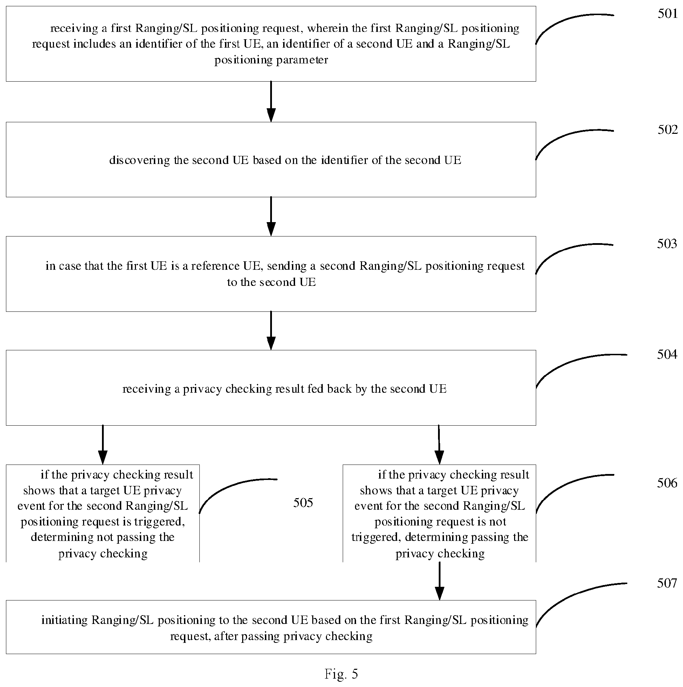

Fig. 5 is a schematic flowchart of a positioning method provided in an embodiment of the present disclosure. The method is applied to a first UE, and as shown in Fig. 5, the method may include the following steps:
Step 501, receiving a first Ranging/SL Positioning request, wherein the first Ranging/SL Positioning request includes an identifier of the first UE, an identifier of a second UE and a Ranging/SL Positioning parameter;
Step 502, discovering the second UE based on the identifier of the second UE;
Step 503, in case that the first UE is a reference UE, sending a second Ranging/SL Positioning request to the second UE;
Step 504, receiving a privacy checking result fed back by the second UE;
Step 505, if the privacy checking result shows that a target UE privacy event for the second Ranging/SL Positioning request is triggered, determining privacy checking not passed;
Step 506, if the privacy checking result shows that the target UE privacy event for the second Ranging/SL Positioning request is not triggered, determining passing privacy checking; and
Step 507, initiating Ranging/SL Positioning to the second UE based on the first Ranging/SL Positioning request, after passing privacy checking.

For example, in an embodiment of the present disclosure, the first UE is a reference UE, and the second UE is a target UE. Specifically, the first UE may be a SL reference UE.

In an embodiment of the present disclosure, after receiving the first Ranging/SL Positioning request, the first UE needs to perform target UE privacy checking on the first Ranging/SL Positioning request before initiating Ranging/SL Positioning to the second UE based on the first Ranging/SL Positioning request, and may also need to perform a reference UE privacy checking on the first Ranging/SL Positioning request.

Optionally, in an embodiment of the present disclosure, when the reference UE privacy checking is required for the first Ranging/SL Positioning request, the first UE may check whether the reference UE privacy event for the first Ranging/SL Positioning request is triggered before sending the second Ranging/SL Positioning request to the second UE, and determine not passing the privacy checking when the reference UE privacy event is triggered.

For example, in an embodiment of the present disclosure, if not passing the privacy checking, the first UE rejects the first Ranging/SL Positioning request. Specifically, when only the target UE privacy checking is required for the second Ranging/SL Positioning request, if the second Ranging/SL Positioning request does not pass the target UE privacy checking, the first UE rejects the first Ranging/SL Positioning request. When it is necessary to perform a target UE privacy checking on the second Ranging/SL Positioning request and a reference UE privacy checking on the first Ranging/SL Positioning request, if either the reference UE privacy checking of the first Ranging/SL Positioning request or the target UE privacy checking of the second Ranging/SL Positioning request fails, the first UE rejects the first Ranging/SL Positioning request.

In an embodiment of the present disclosure, the reference UE privacy event includes at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

Optionally, in an embodiment of the present disclosure, the reference UE privacy event may be stored and maintained in the reference UE, specifically, may be stored and maintained in the SL reference UE.

In an embodiment of the present disclosure, the target UE privacy event includes at least one of:
whether a UE is allowed to perform Ranging/SL Positioning as a SL reference UE;
whether a UE is allowed to perform Ranging/SL Positioning as a SL positioning server UE; or
whether a UE is allowed to request a Ranging/SL Positioning result to the target UE as a SL positioning client UE.

Optionally, in an embodiment of the present disclosure, the target UE privacy event may be stored and maintained in the target UE.

In summary, in embodiments of the present disclosure, the first Ranging/SL Positioning request is received, wherein the first Ranging/SL Positioning request includes the identifiers of the first UE and the second UE and the Ranging/SL Positioning parameter; the second UE is discovered based on its identifier; if the first UE is the reference UE, the second Ranging/SL Positioning request is sent to the second UE; the privacy checking result fed back from the second UE is received; if the privacy checking result shows that the target UE privacy event for the second Ranging/SL Positioning request is triggered, it is determined that the privacy checking is not passed; if the privacy checking result shows that the target privacy event for the second Ranging/SL Positioning request is not triggered, it is determined that the privacy checking is passed; and after passing the privacy checking, Ranging/SL Positioning is initiated to the second UE based on the first Ranging/SL Positioning request. In embodiments of the present disclosure, enabling the first UE to initiate Ranging/SL Positioning to the second UE based on the first Ranging/SL Positioning request after passing privacy checking can enable the SL positioning client UE to perform privacy checking on the UE during Ranging/SL Positioning, thereby improving the security of positioning.

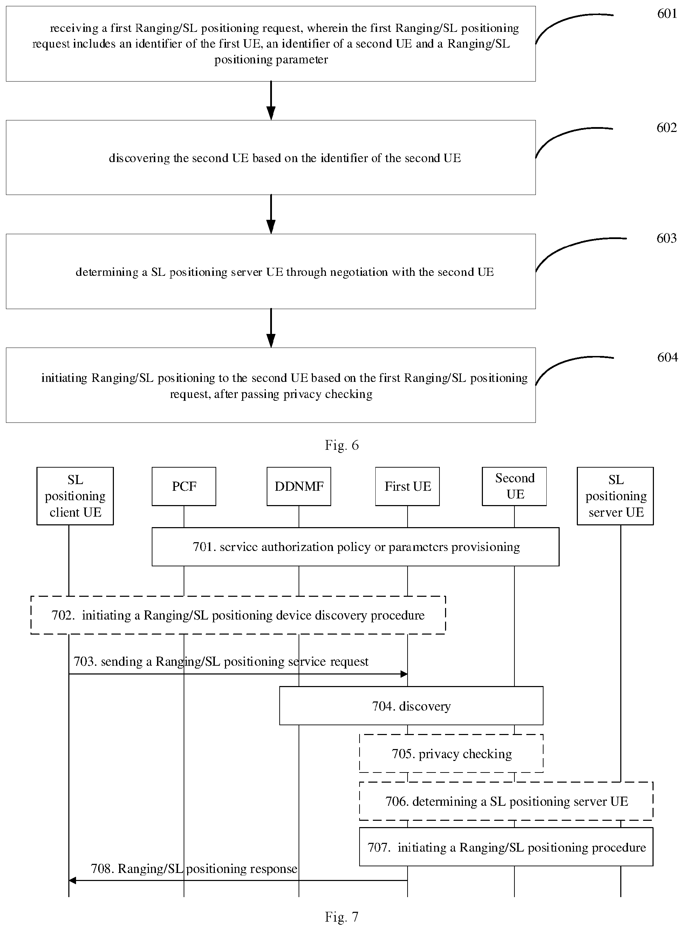

Fig. 6 is a schematic flowchart of a positioning method provided in an embodiment of the present disclosure. The method is applied to a first UE, and as shown in Fig. 6, the method may include the following steps:
Step 601, receiving a first Ranging/SL Positioning request, wherein the first Ranging/SL Positioning request includes an identifier of the first UE, an identifier of a second UE and a Ranging/SL Positioning parameter;
Step 602, discovering the second UE based on the identifier of the second UE;
Step 603, determining a SL positioning server UE through negotiation with the second UE;
Step 604, initiating Ranging/SL Positioning to the second UE based on the first Ranging/SL Positioning request, after passing privacy checking.

In an embodiment of the present disclosure, the first UE and the second UE may be a target UE and a reference UE respectively. When the first UE is the target UE, the second UE is the reference UE. When the first UE is the reference UE, the second UE is the target UE.

Optionally, in an embodiment of the present disclosure, the reference UE may be a SL reference UE. In this case, when the first UE is the target UE, the second UE is the SL reference UE; when the first UE is the SL reference UE, the second UE is the target UE.

For example, in an embodiment of the present disclosure, when the first UE and the second UE negotiate to determine the SL positioning server UE, if the first UE or the second UE supports at least one SL positioning server function, the first UE or the second UE acts as the SL positioning server UE.

In an embodiment of the present disclosure, if the target UE among the first UE and the second UE supports the SL positioning server function, the target UE acts as the SL positioning server UE. If the reference UE in the first UE and the second UE supports the SL positioning server function, then the reference UE acts as the SL positioning server UE. If both the first UE and the second UE support the SL positioning server function, at least one UE is selected from the first UE and the second UE to act as the SL positioning server UE.

For example, in an embodiment of the present disclosure, when the first UE and the second UE negotiate to determine the SL positioning server UE, if neither the first UE nor the second UE supports the SL positioning server function, a device other than the first UE and the second UE is selected as the SL positioning server UE.

In an embodiment of the present disclosure, If neither the first UE nor the second UE can support the SL positioning server function, when the first UE selects the device other than the first UE and the second UE as the SL positioning server UE, first, the first UE can determine at least one candidate SL positioning server UE. Next, the first UE can obtain the positioning server privacy event for at least one candidate SL positioning server UE. Finally, the first UE can select a SL positioning server UE from at least one candidate SL positioning server UE based on the positioning server privacy event for at least one candidate SL positioning server UE.

Optionally, in an embodiment of the present disclosure, the SL positioning server function includes at least one of:
coordination and scheduling of resources required for Ranging/SL Positioning;
determining types and a numeric count of Ranging/SL Positioning methods;
calculating a Ranging/SL Positioning result.

Optionally, in an embodiment of the present disclosure, the positioning server privacy event includes at least one of:
whether a UE is allowed to perform Ranging/SL Positioning as the SL positioning server UE.

For example, in an embodiment of the present disclosure, if not passing the privacy checking, the first UE rejects the first Ranging/SL Positioning request.

Technicians in this field can understand that the multiple implementation methods executed by the first UE in embodiments of the present disclosure can be implemented separately or combined in any way, which is not limited in embodiments of the present disclosure.

In an embodiment of the present disclosure, Fig. 7 is a schematic diagram of interaction of a positioning method provided in an embodiment of the present disclosure. As shown in Fig. 7, the method includes the following steps.

Step 701, service authorization policy or parameters are provisioned to the PCF, DDNMF, the first UE and the second UE.

Step 702, the SL positioning client UE initiates the Ranging/SL Positioning device discovery procedure, to discover the first UE or the second UE, and successfully discovers one of them, such as the first UE.

In Fig. 7, the first UE represents the UE that the SL positioning client UE decides to send the service request to. Step 702 is skipped in the following scenarios:
there is existing communication between the SL positioning client UE and the first UE;
the SL positioning client UE and the first UE are the same UE, i.e., the service request is initiated from the upper layer of the first UE.

When the SL positioning client UE initiates the Ranging/SL Positioning device discovery procedure, it is also possible that the second UE is discovered. If the second UE is discovered, the first UE can represent the UE that the SL positioning client UE decides to send the service request to.

The device discovery follows the device discover procedure of V2X or ProSe or the Ranging/SL Positioning device discovery procedure.

Step 703, the SL positioning client UE send the Ranging/SL Positioning service request to the first UE, wherein the Ranging/SL Positioning service request includes, but is not limited to, application layer IDs of the first UE and the second UE, result content (distance, angle, or both), and required QoS.

Step 704, the first UE discovers the second UE.

Whether DDNMF is involved is determined by the solution developed under KI#3.

Step 705, privacy checking is performed, if the privacy checking is passed, the following steps are performed, and if not passing the privacy checking, the first UE rejects the first Ranging/SL Positioning request.

Step 706, the first UE and the second UE determine the SL positioning server UE, that is, who performs the SL positioning server function, by exchanging their capability.

Step 707, the first UE initiates the Ranging/SL Positioning procedure to the second UE, to trigger the measurement and the calculation of the result.

The application layer IDs of the first UE and the second UE are used for the communication between the first UE and the second UE over PC5.

Step 708, the first UE sends the Ranging/SL Positioning result of the first UE and the second UE to the SL positioning client UE in the Ranging/SL Positioning response.

In summary, in embodiments of the present disclosure, the first Ranging/SL Positioning request is received, wherein the first Ranging/SL Positioning request includes the identifiers of the first UE and the second UE and the Ranging/SL Positioning parameter; the second UE is discovered based on its identifier; the SL positioning server UE is determined through negotiation with the second UE; after passing the privacy checking, the Ranging/SL Positioning is initiated to the second UE based on the first Ranging/SL Positioning request. In embodiments of the present disclosure, enabling the first UE to initiate Ranging/SL Positioning to the second UE based on the first Ranging/SL Positioning request after passing privacy checking can enable the SL positioning client UE to perform privacy checking on the UE during Ranging/SL Positioning, thereby improving the security of positioning and increasing the involvement of the SL positioning server UE.

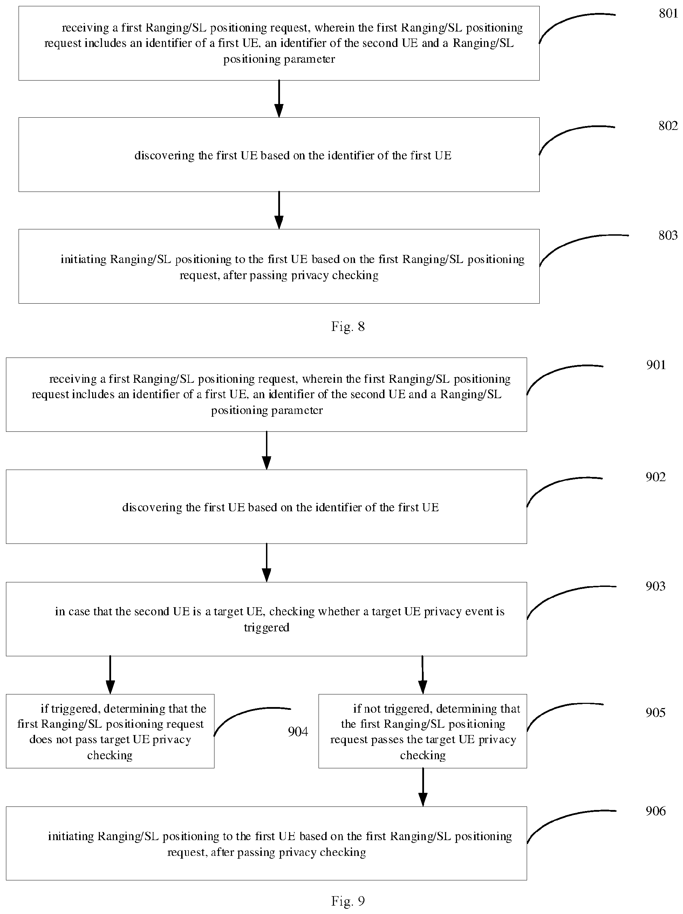

Fig. 8 is a schematic flowchart of a positioning method provided in an embodiment of the present disclosure. The method is applied to a second UE, and as shown in Fig. 8, the method may include the following steps:
Step 801, receiving a first Ranging/SL Positioning request, wherein the first Ranging/SL Positioning request includes an identifier of a first UE, an identifier of the second UE and a Ranging/SL Positioning parameter;
Step 802, discovering the first UE based on the identifier of the first UE;
Step 803, initiating Ranging/SL Positioning to the first UE based on the first Ranging/SL Positioning request, after passing privacy checking.

In an embodiment of the present disclosure, the first UE and the second UE may be a target UE and a reference UE respectively. When the first UE is the target UE, the second UE is the reference UE. When the first UE is the reference UE, the second UE is the target UE.

Optionally, in an embodiment of the present disclosure, the reference UE may be a SL reference UE. When the first UE is the target UE, the second UE is the SL reference UE. When the first UE is the SL reference UE, the second UE is the target UE.

In summary, in embodiments of the present disclosure, the first Ranging/SL Positioning request is received, wherein the first Ranging/SL Positioning request includes the identifier of the first UE, the identifier of the second UE and the Ranging/SL Positioning parameter; the first UE is discovered based on its identifier; and after passing the privacy checking, Ranging/SL Positioning is initiated to the first UE based on the first Ranging/SL Positioning request. In embodiments of the present disclosure, enabling the second UE to initiate Ranging/SL Positioning to the first UE based on the first Ranging/SL Positioning request after passing privacy checking can enable the SL positioning client UE to perform privacy checking on the UE during Ranging/SL Positioning, thereby improving the security of positioning.

Fig. 9 is a schematic flowchart of a positioning method provided in an embodiment of the present disclosure. The method is applied to a second UE, and as shown in Fig. 9, the method may include the following steps:
Step 901, receiving a first Ranging/SL Positioning request, wherein the first Ranging/SL Positioning request includes an identifier of a first UE, an identifier of the second UE and a Ranging/SL Positioning parameter;
Step 902, discovering the first UE based on the identifier of the first UE;
Step 903, in case that the second UE is a target UE, checking whether a target UE privacy event is triggered;
Step 904, if triggered, determining that the first Ranging/SL Positioning request does not pass target UE privacy checking;
Step 905, if not triggered, determining that the first Ranging/SL Positioning request passes the target UE privacy checking;
Step 906, initiating Ranging/SL Positioning to the first UE based on the first Ranging/SL Positioning request, after passing privacy checking.

For example, in an embodiment of the present disclosure, the second UE is a target UE, and the first UE may be a reference UE. Specifically, the first UE may be a SL reference UE.

In an embodiment of the present disclosure, after receiving the first Ranging/SL Positioning request, the second UE needs to perform target UE privacy checking on the first Ranging/SL Positioning request before initiating Ranging/SL Positioning to the second UE based on the first Ranging/SL Positioning request, and may also need to perform a reference UE privacy checking on the first Ranging/SL Positioning request.

Optionally, in an embodiment of the present disclosure, when the second UE needs to perform the target UE privacy checking and the reference UE privacy checking on the first Ranging/SL Positioning request, the second UE may initiate the reference UE privacy checking on the first Ranging/SL Positioning request after determining that the first Ranging/SL Positioning request has passed the target UE privacy checking. If the first Ranging/SL Positioning request passes both the target UE privacy checking and the reference UE privacy checking, the privacy checking is determined as passed. If the first Ranging/SL Positioning request does not pass any of the target UE privacy checking or the reference UE privacy checking, the privacy checking is determined as not passed.

Optionally, in an embodiment of the present disclosure, if not passing the privacy checking, the second UE rejects the first Ranging/SL Positioning request. Specifically, when only the target UE privacy checking is required for the first Ranging/SL Positioning request, if the first Ranging/SL Positioning request does not pass the target UE privacy checking, the second UE rejects the first Ranging/SL Positioning request. When it is necessary to perform target UE privacy checking and reference UE privacy checking on the first Ranging/SL Positioning request, if the first Ranging/SL Positioning request does not pass any of the target UE privacy checking or the reference UE privacy checking, the second UE rejects the first Ranging/SL Positioning request.

For example, in an embodiment of the present disclosure, after the second UE performs the target UE privacy checking on the first Ranging/SL Positioning request, the second UE can feed back a privacy checking result corresponding to the target UE privacy checking to the first UE.

In an embodiment of the present disclosure, the reference UE privacy event includes at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

Optionally, in an embodiment of the present disclosure, the reference UE privacy event may be stored and maintained in the reference UE, specifically, may be stored and maintained in the SL reference UE.

In an embodiment of the present disclosure, the target UE privacy event includes at least one of:
whether a UE is allowed to perform Ranging/SL Positioning as a SL reference UE;
whether a UE is allowed to perform Ranging/SL Positioning as a SL positioning server UE; or
whether a UE is allowed to request a Ranging/SL Positioning result to the target UE as a SL positioning client UE.

Optionally, in an embodiment of the present disclosure, the target UE privacy event may be stored and maintained in the target UE.

In summary, in embodiments of the present disclosure, the first Ranging/SL Positioning request is received, wherein the first Ranging/SL Positioning request includes the identifiers of the first UE and the second UE and the Ranging/SL Positioning parameter; the first UE is discovered based on the identifier of the first UE; if the second UE is the target UE, it is checked whether the target UE privacy event is triggered; if triggered, it is determined that the first Ranging/SL Positioning request does not pass the target UE privacy checking; if not triggered, it is determined that the first Ranging/SL Positioning request passes the target UE privacy checking; after passing the privacy checking, Ranging/SL Positioning is initiated to the first UE based on the first Ranging/SL Positioning request. In embodiments of the present disclosure, enabling the second UE to initiate Ranging/SL Positioning to the first UE based on the first Ranging/SL Positioning request after passing privacy checking can enable the SL positioning client UE to perform privacy checking on the UE during Ranging/SL Positioning, thereby improving the security of positioning.

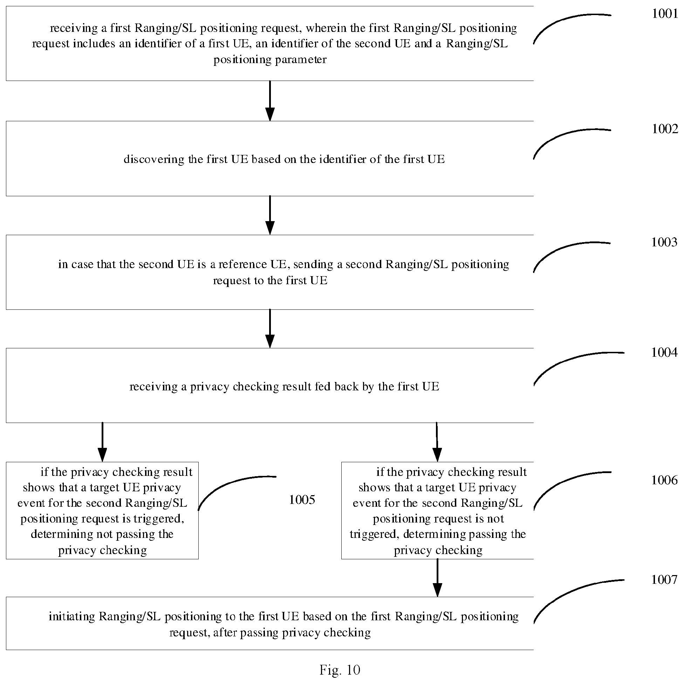

Fig. 10 is a schematic flowchart of a positioning method provided in an embodiment of the present disclosure. The method is applied to a second UE, and as shown in Fig. 10, the method may include the following steps:
Step 1001, receiving a first Ranging/SL Positioning request, wherein the first Ranging/SL Positioning request includes an identifier of a first UE, an identifier of the second UE and a Ranging/SL Positioning parameter;
Step 1002, discovering the first UE based on the identifier of the first UE;
Step 1003, in case that the second UE is a reference UE, sending a second Ranging/SL Positioning request to the first UE;
Step 1004, receiving a privacy checking result fed back by the first UE;
Step 1005, if the privacy checking result shows that a target UE privacy event for the second Ranging/SL Positioning request is triggered, determining privacy checking not passed;
Step 1006, if the privacy checking result shows that the target UE privacy event for the second Ranging/SL Positioning request is not triggered, determining passing privacy checking; and
Step 1007, initiating Ranging/SL Positioning to the first UE based on the first Ranging/SL Positioning request, after passing privacy checking.

For example, in an embodiment of the present disclosure, the second UE is a reference UE, and the first UE is a target UE. Specifically, the second UE may be a SL reference UE.

In an embodiment of the present disclosure, after receiving the first Ranging/SL Positioning request, the first UE needs to perform target UE privacy checking on the first Ranging/SL Positioning request before initiating Ranging/SL Positioning to the second UE based on the first Ranging/SL Positioning request, and may also need to perform a reference UE privacy checking on the first Ranging/SL Positioning request.

Optionally, in an embodiment of the present disclosure, when the reference UE privacy checking is required for the first Ranging/SL Positioning request, the second UE may check whether the reference UE privacy event for the first Ranging/SL Positioning request is triggered before sending the second Ranging/SL Positioning request to the first UE, and determine not passing the privacy checking when the reference UE privacy event is triggered.

For example, in an embodiment of the present disclosure, if not passing the privacy checking, the second UE rejects the first Ranging/SL Positioning request. Specifically, when only the target UE privacy checking is required for the second Ranging/SL Positioning request, if the second Ranging/SL Positioning request does not pass the target UE privacy checking, the second UE rejects the first Ranging/SL Positioning request. When it is necessary to perform a target UE privacy checking on the second Ranging/SL Positioning request and a reference UE privacy checking on the first Ranging/SL Positioning request, if either the reference UE privacy checking of the first Ranging/SL Positioning request or the target UE privacy checking of the second Ranging/SL Positioning request fails, the second UE rejects the first Ranging/SL Positioning request.

In an embodiment of the present disclosure, the reference UE privacy event includes at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

Optionally, in an embodiment of the present disclosure, the reference UE privacy event may be stored and maintained in the reference UE, specifically, may be stored and maintained in the SL reference UE.

In an embodiment of the present disclosure, the target UE privacy event includes at least one of:
whether a UE is allowed to perform Ranging/SL Positioning as a SL reference UE;
whether a UE is allowed to perform Ranging/SL Positioning as a SL positioning server UE; or
whether a UE is allowed to request a Ranging/SL Positioning result to the target UE as a SL positioning client UE.

Optionally, in an embodiment of the present disclosure, the target UE privacy event may be stored and maintained in the target UE.

In summary, in embodiments of the present disclosure, the first Ranging/SL Positioning request is received, wherein the first Ranging/SL Positioning request includes the identifiers of the first UE and the second UE and the Ranging/SL Positioning parameter; the first UE is discovered based on its identifier; if the second UE is the reference UE, the second Ranging/SL Positioning request is sent to the first UE; the privacy checking result fed back from the first UE is received; if the privacy checking result shows that the target UE privacy event for the second Ranging/SL Positioning request is triggered, it is determined that the privacy checking is not passed; if the privacy checking result shows that the target privacy event for the second Ranging/SL Positioning request is not triggered, it is determined that the privacy checking is passed; and after passing the privacy checking, Ranging/SL Positioning is initiated to the first UE based on the first Ranging/SL Positioning request. In embodiments of the present disclosure, enabling the second UE to initiate Ranging/SL Positioning to the first UE based on the first Ranging/SL Positioning request after passing privacy checking can enable the SL positioning client UE to perform privacy checking on the UE during Ranging/SL Positioning, thereby improving the security of positioning.

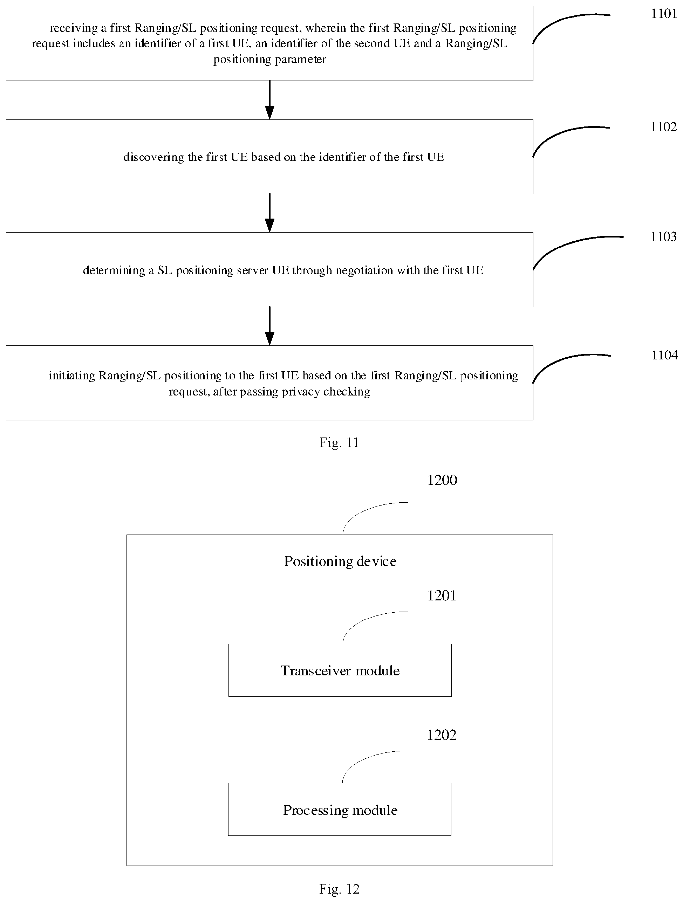

Fig. 11 is a schematic flowchart of a positioning method provided in an embodiment of the present disclosure. The method is applied to a second UE, and as shown in Fig. 11, the method may include the following steps:
Step 1101, receiving a first Ranging/SL Positioning request, wherein the first Ranging/SL Positioning request includes an identifier of a first UE, an identifier of the second UE and a Ranging/SL Positioning parameter;
Step 1102, discovering the first UE based on the identifier of the first UE;
Step 1103, determining a SL positioning server UE through negotiation with the first UE;
Step 1104, initiating Ranging/SL Positioning to the first UE based on the first Ranging/SL Positioning request, after passing privacy checking.

In an embodiment of the present disclosure, the first UE and the second UE may be a target UE and a reference UE respectively. When the first UE is the target UE, the second UE is the reference UE. When the firs t UE is the reference UE, the second UE is the target UE.

Optionally, in an embodiment of the present disclosure, the reference UE may be a SL reference UE. In this case, when the first UE is the target UE, the second UE is the SL reference UE; when the first UE is the SL reference UE, the second UE is the target UE.

For example, in an embodiment of the present disclosure, when the first UE and the second UE negotiate to determine the SL positioning server UE, if the first UE or the second UE supports at least one SL positioning server function, the first UE or the second UE acts as the SL positioning server UE.

In an embodiment of the present disclosure, if the target UE among the first UE and the second UE supports the SL positioning server function, the target UE acts as the SL positioning server UE. If the reference UE in the first UE and the second UE supports the SL positioning server function, then the reference UE acts as the SL positioning server UE. If both the first UE and the second UE support the SL positioning server function, at least one UE is selected from the first UE and the second UE to act as the SL positioning server UE.

For example, in an embodiment of the present disclosure, when the first UE and the second UE negotiate to determine the SL positioning server UE, if neither the first UE nor the second UE can support the SL positioning server function, a device other than the first UE and the second UE is selected as the SL positioning server UE.

In an embodiment of the present disclosure, If neither the first UE nor the second UE can support the SL positioning server function, when the first UE selects the device other than the first UE and the second UE as the SL positioning server UE, first, the first UE can determine at least one candidate SL positioning server UE. Next, the first UE can obtain the positioning server privacy event of at least one candidate SL positioning server UE. Finally, the first UE can select a SL positioning server UE from at least one candidate SL positioning server UE based on the positioning server privacy event of at least one candidate SL positioning server UE.

Optionally, in an embodiment of the present disclosure, the SL positioning server function includes at least one of:
coordination and scheduling of resources required for Ranging/SL Positioning;
determining types and a numeric count of Ranging/SL Positioning methods;
calculating a Ranging/SL Positioning result.

Optionally, in an embodiment of the present disclosure, the positioning server privacy event includes at least one of:
whether a UE is allowed to perform Ranging/SL Positioning as the SL positioning server UE.

For example, in an embodiment of the present disclosure, if not passing the privacy checking, the second UE rejects the first Ranging/SL Positioning request.

In summary, in embodiments of the present disclosure, the first Ranging/SL Positioning request is received, wherein the first Ranging/SL Positioning request includes the identifiers of the first UE and the second UE, and the Ranging/SL Positioning parameter; the first UE is discovered based on the second UE; the SL positioning server UE is determined through negotiation with the first UE; and the Ranging/SL Positioning is initiated to the first UE based on the first Ranging/SL Positioning request, after passing the privacy checking. In embodiments of the present disclosure, enabling the second UE to initiate the Ranging/SL Positioning to the first UE based on the first Ranging/SL Positioning request after passing privacy checking can enable the SL positioning client UE to perform privacy checking on the UE during the Ranging/SL Positioning, thereby improving the security of positioning, and meanwhile increasing the involvement of the SL positioning server UE.

Technicians in this field can understand that the multiple implementation methods executed by the first UE in embodiments of the present disclosure can be implemented separately or combined in any way, which is not limited in embodiments of the present disclosure.

Fig. 12 is a block diagram of a positioning device provided in an embodiment of the present disclosure. As shown in Fig. 12, the device 1200 may be arranged on a first UE side, and the device 1200 may include a transceiver module 1201 and a processing module 1202.

The transceiver module 1201 is configured to receive a first Ranging/SL Positioning request, wherein the first Ranging/SL Positioning request include an identifier of the first UE, an identifier of a second UE, and a Ranging/SL Positioning parameter.

The processing module 1202 is configured to discover the second UE based on the identifier of the second UE.

The processing module 1202 is further configured to initiate Ranging/SL Positioning to the second UE based on the first Ranging/SL Positioning request, after passing privacy checking.

In summary, in the positioning device of an embodiment of the present disclosure, the first Ranging/SL Positioning request is received by the transceiver module, wherein the first Ranging/SL Positioning request includes the identifiers of the first UE and the second UE and the Ranging/SL Positioning parameter; the processing module discovers the second UE based on the identifier of the second UE, and initiates the Ranging/SL Positioning to the second UE based on the first Ranging/SL Positioning request, after passing privacy checking. In an embodiment of the present disclosure, enabling the first UE to initiate the Ranging/SL Positioning to the second UE based on the first Ranging/SL Positioning request after passing privacy checking can enable the SL positioning client UE to perform privacy checking on the UE during the Ranging/SL Positioning, thereby improving the security of the positioning.

Optionally, in an embodiment of the present disclosure, the processing module 1202 is further configured to:
in case that the first UE is a target UE, check whether a target UE privacy event is triggered;
if triggered, determine that the first Ranging/SL Positioning request does not pass target UE privacy checking;
if not triggered, determine that the first Ranging/SL Positioning request passes the target UE privacy checking.

Optionally, in an embodiment of the present disclosure, the transceiver module 1201 is further configured to:
feed back a privacy checking result corresponding to the target UE privacy checking to the second UE.

Optionally, in an embodiment of the present disclosure, the processing module 1202 is further configured to, after determining that the first Ranging/SL Positioning request passes the target UE privacy checking,

initiate a reference UE privacy checking for the first Ranging/SL Positioning request, wherein if the first Ranging/SL Positioning request passes both the target UE privacy checking and the reference UE privacy checking, the privacy checking is determined as passed, and if the first Ranging/SL Positioning request does not pass any of the target UE privacy checking or the reference UE privacy checking, the privacy checking is determined as not passed.

Optionally, in an embodiment of the present disclosure,
the transceiver module 1201 is further configured to, in case that the first UE is a reference UE, send a second Ranging/SL Positioning request to the second UE;
the transceiver module 1201 is further configured to receive a privacy checking result fed back by the second UE;
the processing module 1202 is further configured to determine not passing the privacy checking, if the privacy checking result shows that a target UE privacy event for the second Ranging/SL Positioning request is triggered;
the processing module 1202 is further configured to determine passing the privacy checking, if the privacy checking result shows that a target UE privacy event for the second Ranging/SL Positioning request is not triggered.

Optionally, in an embodiment of the present disclosure, the processing module 1202 is further configured to:
if not passing the privacy checking, reject the first Ranging/SL Positioning request.

Optionally, in an embodiment of the present disclosure, the processing module 1202 is further configured to, before sending the second Ranging/SL Positioning request to the second UE,
check whether a reference UE privacy event for the first Ranging/SL Positioning request is triggered, and determine not passing the privacy checking in case that the reference UE privacy event is triggered.

Optionally, in an embodiment of the present disclosure, the target UE privacy event includes at least one of:
whether a UE is allowed to perform Ranging/SL Positioning as a SL reference UE;
whether a UE is allowed to perform Ranging/SL Positioning as a SL positioning server UE;
whether a UE is allowed to request a Ranging/SL Positioning result to the target UE as a SL positioning client UE.

Optionally, in an embodiment of the present disclosure, the reference UE privacy event includes at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

Optionally, in an embodiment of the present disclosure, the processing module 1202 is further configured to:
determine a SL positioning server UE through negotiation with the second UE.

Optionally, in an embodiment of the present disclosure, the processing module 1202 is specifically configured to, when determining the SL positioning server UE through negotiation with the second UE:
if the first UE or the second UE supports at least one SL positioning server function, determine the first UE or the second UE as the SL positioning server UE;
if neither the first UE nor the second UE can support any SL positioning server function, select a device other than the first UE and the second UE as the SL positioning server UE.

Optionally, in an embodiment of the present disclosure, the processing module 1202 is specifically configured to, when selecting the device other than the first UE and the second UE as the SL positioning server UE:
determine at least one candidate SL positioning server UE;
obtain a positioning server privacy event for the at least one candidate SL positioning server UE;
select the SL positioning server UE from the at least one candidate SL positioning server UE based on the positioning server privacy event for the at least one candidate SL positioning server UE.

Optionally, the SL positioning server function includes at least one of:
coordination and scheduling of resources required for Ranging/SL Positioning;
determining types and a numeric count of Ranging/SL Positioning methods;
calculating a Ranging/SL Positioning result.

Optionally, the positioning server privacy event includes at least one of:
whether a UE is allowed to perform Ranging/SL Positioning as the SL positioning server UE.

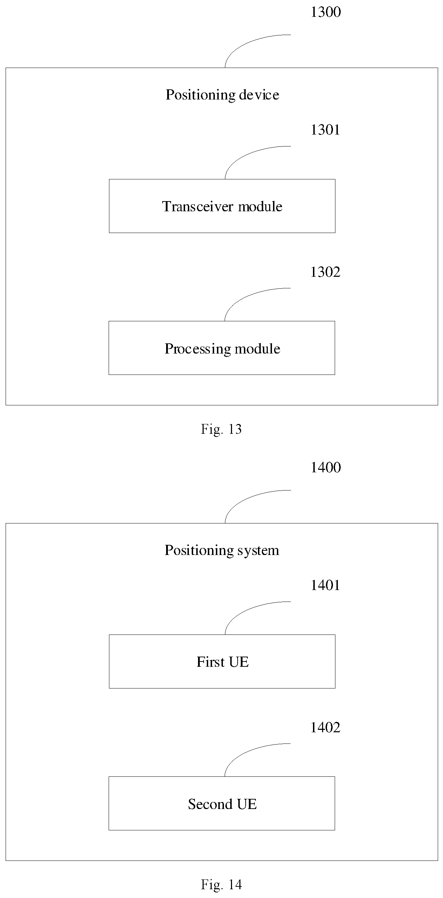

Fig. 13 is a block diagram of a positioning device provided in an embodiment of the present disclosure. As shown in Fig. 13, the device 1300 may be arranged on an API calling entity side, and the device 1300 may include a transceiver module 1301 and a processing module 1302.

The transceiver module 1301 is configured to receive a first Ranging/SL Positioning request, wherein the first Ranging/SL Positioning request includes an identifier of a first UE, an identifier of the second UE and a Ranging/SL Positioning parameter.

The processing module 1302 is configured to discover the first UE based on the identifier of the first UE.

The processing module 1302 is further configured to initiate Ranging/SL Positioning to the first UE based on the first Ranging/SL Positioning request, after passing privacy checking.

In summary, in the positioning device of an embodiment of the present disclosure, the first Ranging/SL Positioning request is received by the transceiver module, wherein the first Ranging/SL Positioning request includes the identifiers of the first UE and the second UE, and the Ranging/SL Positioning parameter; the processing module discovers the first UE based on the identifier of the first UE, and initiates the Ranging/SL Positioning to the first UE based on the first Ranging/SL Positioning request, after passing the privacy checking. In an embodiment of the present disclosure, enabling the second UE to initiate the Ranging/SL Positioning to the first UE based on the first Ranging/SL Positioning request after passing privacy checking can enable the SL positioning client UE to perform privacy checking on the UE during the Ranging/SL Positioning, thereby improving the security of the positioning.

Optionally, in an embodiment of the present disclosure, the processing module 1302 is further configured to:
in case that the second UE is a target UE, check whether a target UE privacy event is triggered;
if triggered, determine that the first Ranging/SL Positioning request does not pass target UE privacy checking;
if not triggered, determine that the first Ranging/SL Positioning request passes the target UE privacy checking.

Optionally, in an embodiment of the present disclosure, the transceiver module 1301 is further configured to:
feed back a privacy checking result corresponding to the target UE privacy checking to the first UE.

Optionally, in an embodiment of the present disclosure, the processing module 1302 is further configured to, after determining that the first Ranging/SL Positioning request passes the target UE privacy checking:
initiate a reference UE privacy checking for the first Ranging/SL Positioning request, wherein if the first Ranging/SL Positioning request passes both the target UE privacy checking and the reference UE privacy checking, the privacy checking is determined as passed, and if the first Ranging/SL Positioning request does not pass any of the target UE privacy checking or the reference UE privacy checking, the privacy checking is determined as not passed.

Optionally, in an embodiment of the present disclosure,
the transceiver module 1301 is further configured to, in case that the second UE is a reference UE, send a second Ranging/SL Positioning request to the first UE;
the transceiver module 1301 is further configured to receive a privacy checking result fed back by the first UE;
the processing module 1302 is further configured to determine not passing the privacy checking, if the privacy checking result shows that a target UE privacy event for the second Ranging/SL Positioning request is triggered;
the processing module 1302 is further configured to determine passing the privacy checking, if the privacy checking result shows that a target UE privacy event for the second Ranging/SL Positioning request is not triggered.

Optionally, in an embodiment of the present disclosure, the processing module 1302 is further configured to:
if not passing the privacy checking, reject the first Ranging/SL Positioning request.

Optionally, in an embodiment of the present disclosure, the processing module 1302 is further configured to, before sending the second Ranging/SL Positioning request to the first UE,
check whether a reference UE privacy event for the first Ranging/SL Positioning request is triggered, and determine not passing the privacy checking in case that the reference UE privacy event is triggered.

Optionally, in an embodiment of the present disclosure, the target UE privacy event includes at least one of:
whether a UE is allowed to perform Ranging/SL Positioning as a SL reference UE;
whether a UE is allowed to perform Ranging/SL Positioning as a SL positioning server UE;
whether a UE is allowed to request a Ranging/SL Positioning result to the target UE as a SL positioning client UE.

Optionally, in an embodiment of the present disclosure, the reference UE privacy event includes at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

Optionally, in an embodiment of the present disclosure, the processing module 1302 is further configured to:
determine a SL positioning server UE through negotiation with the first UE.

Optionally, in an embodiment of the present disclosure, the processing module 1302 is specifically configured to, when determining the SL positioning server UE through negotiation with the first UE:
if the first UE or the second UE supports at least one SL positioning server function, determine the first UE or the second UE as the SL positioning server UE;
if neither the first UE nor the second UE can support any SL positioning server function, select a device other than the first UE and the second UE as the SL positioning server UE.

Optionally, in an embodiment of the present disclosure, the processing module 1302 is specifically configured to, when selecting the device other than the first UE and the second UE as the SL positioning server UE:
determine at least one candidate SL positioning server UE;
obtain a positioning server privacy event for the at least one candidate SL positioning server UE;
select the SL positioning server UE from the at least one candidate SL positioning server UE based on the positioning server privacy event for the at least one candidate SL positioning server UE.

Optionally, in an embodiment of the present disclosure, the SL positioning server function includes at least one of:
coordination and scheduling of resources required for Ranging/SL Positioning;
determining types and a numeric count of Ranging/SL Positioning methods;
calculating a Ranging/SL Positioning result.

Optionally, in an embodiment of the present disclosure, the positioning server privacy event includes at least one of:
whether a UE is allowed to perform Ranging/SL Positioning as the SL positioning server UE.

Fig. 14 is a block diagram of a positioning system provided in an embodiment of the present disclosure. As shown in Fig. 14, the system 1400 includes:
a first UE 1401, configured to perform the method shown in any of Fig. 1 to Fig. 7;
a second UE 1402, configured to perform the method shown in any of Fig. 8 to Fig. 11.

In summary, this disclosure provides a processing method for a "positioning" situation, so that the SL positioning client UE can perform privacy checking on the UE during Ranging/SL Positioning, thereby improving the security of positioning.

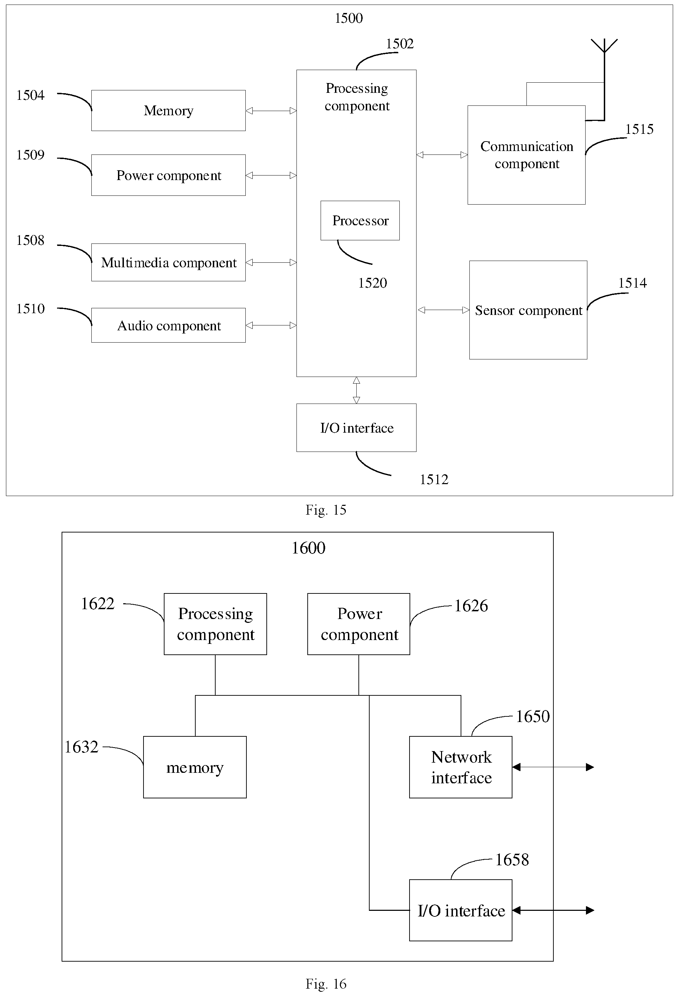

Fig. 15 is a block diagram of a terminal device UE 1500 provided in an embodiment of the present disclosure. For example, the UE 1500 may be a mobile phone, a computer, a digital broadcasting terminal device, a messaging device, a game console, a tablet device, a medical device, a fitness device, a personal digital assistant, etc.

Referring to Fig. 15, the UE 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the UE 1500, such as the operations associated with display, telephone calls, data communications, camera operations, and recording operations. The processing component 1502 may include one or more processors 1515 to execute instructions, to complete all or some of steps of the method described above. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the UE 1500. Examples of such data include instructions for any applications or methods operated on the UE 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the UE 1500. The power component 1506 may include a power management system, one or more power sources, and any other components associated with the generation, management, and distribution of power in the UE 1500.

The multimedia component 1508 includes a screen providing an output interface between the UE 1500 and the user. In some embodiments, the screen may include a liquid crystal display (LCD) and a touch panel (TP). If the screen includes a touch panel, the screen can be implemented as a touch screen to receive input signals from the user. The touch panel includes at least one touch sensor to sense touch, sliding, and gestures on the touch panel. The touch sensor can not only sense the boundaries of touch or sliding actions, but also detect the wake-up time and pressure associated with the touch or sliding operation. In some embodiments, the multimedia component 1508 includes a front camera and/or a rear camera. When the UE 1500 is in an operation mode, such as a shooting mode or a video mode, the front camera and/or the rear camera can receive external multimedia data. Each front camera and rear camera can be a fixed optical lens system or have focal length and optical zoom capabilities.

The audio component 1510 is configured to output and/or input audio signals. For example, the audio component 1510 includes a microphone ("MIC") configured to receive an external audio signal when the UE 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker for outputting audio signals.

The I/O interface 1512 provides an interface between the processing component 1502 and peripheral interface modules, such as a keyboard, a click wheel, buttons, and the like. The buttons may include but are not limited to: home button, volume button, start button, and lock button.

The sensor component 1514 includes one or more sensors to provide status assessments of various aspects of the UE 1500. For instance, the sensor component 1514 may detect an open/closed status of the UE 1500, relative positioning of components, e.g., the display and the keypad, of the UE 1500, a change in position of the UE 1500 or a component of the UE 1500, a presence or absence of a user contact with the UE 1500, an orientation or an acceleration/deceleration of the UE 1500, and a change in temperature of the UE 1500. The sensor component 1514 may include a proximity sensor configured to detect the presence of nearby objects without any physical contact. The sensor component 1514 may also include a light sensor, such as a CMOS or CCD image sensor, applicable for imaging applications. In some embodiments, the sensor component 1514 may also include an acceleration sensor, a gyroscope sensor, a magnetic sensor, a pressure sensor or a temperature sensor.

The communication component 1516 is configured to facilitate communication, wired or wirelessly, between the UE 1500 and other devices. The UE 1500 can access a wireless network based on a communication standard, such as WiFi, 2G, or 3G, or a combination thereof. In an exemplary embodiment, the communication component 1516 receives a broadcast signal or broadcast associated information from an external broadcast management system via a broadcast channel. In an exemplary embodiment, the communication component 1516 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the UE 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the method described above.

Fig. 16 is a block diagram of a network side device 1600 provided in an embodiment of the present disclosure. For example, the network side device 1600 may be provided as a network side device. Referring to Fig. 16, the network side device 1600 includes a processing component 1622, which further includes at least one processor, and memory resources represented by memory 1632, for storing instructions that can be executed by the processing component 1622, such as application programs. The application program stored in memory 1632 may include one or more modules each corresponding to a set of instructions. In addition, the processing component 1622 is configured to execute instructions to perform any of the methods previously applied to the network side device.

The network side device 1600 may also include a power component 1626 configured to perform power management for the network side device 1600, a wired or wireless network interface 1650 configured to connect the network side device 1600 to the network, and an input/output (I/O) interface 1658. The network side device 1600 can operate an operating system based on storage 1632, such as Windows Server TM, Mac OS XTM, Unix TM, Linux TM, Free BSDTM, or similar.

In the above embodiments provided in this disclosure, the methods provided in this disclosure are introduced from the perspectives of network side device and UE, respectively. In order to achieve the various functions in the methods provided in the embodiments of the present disclosure, the network side device and UE may include hardware structures, software modules, or a combination of hardware structures and software modules to implement the aforementioned functions. One of the above functions can be executed in the form of hardware structure, software module, or a combination of hardware structure and software module.

In the above embodiments provided in this disclosure, the methods provided in this disclosure are introduced from the perspectives of network side device and UE, respectively. In order to achieve the various functions in the methods provided in the embodiments of the present disclosure, the network side device and UE may include hardware structures, software modules, or a combination of hardware structures and software modules to implement the aforementioned functions. One of the above functions can be executed in the form of hardware structure, software module, or a combination of hardware structure and software module.

Embodiments of the present disclosure provide a communication device. The communication device may include a transceiver module and a processing module. The transceiver module may include a sending module and/or a receiving module. The sending module is used to implement the sending function, and the receiving module is used to implement the receiving function. The transceiver module can implement the sending function and/or the receiving function.

The communication device may be a network device, a device within the network device, or a device that can be used in conjunction with the network device.

Another communication device is provided in an embodiment of the present disclosure. The communication device can be a network device, a chip, chip system, or processor that supports the network device to implement the above methods, or a chip, chip system, or processor that supports the terminal device to implement the above methods. This device can be used to implement the methods described in the above method embodiments, which can be referred to in the description of the above method embodiments.

The communication device may include one or more processors. The processor may be a general-purpose processor or a dedicated processor, etc. For example, it may be a baseband processor or a central processor. The baseband processor can be used to process communication protocols and communication data, while the central processor can be used to control communication devices (such as base stations, baseband chips, terminal devices, terminal device chips, DU or CU, etc.), execute computer programs, and process data from computer programs.

Optionally, the communication device may also include one or more memories, on which computer programs may be stored. The processor executes the computer programs to enable the communication device to perform the methods described in the above method embodiments. Optionally, the memory may also store data. The communication device and the memory can be set separately or integrated together.

Optionally, the communication device may also include a transceiver and an antenna. The transceiver can be referred to as a transceiver unit, transceiver machine, or transceiver circuit, etc., used to achieve transceiver functions. The transceiver can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device may also include one or more interface circuits. The interface circuit is used to receive code instructions and transmit them to the processor. The processor executes the code instructions to cause the communication device to perform the method described in the above method embodiments.

The communication device is the first UE: the processor is configured to perform the method shown in any of Fig. 1 to Fig. 7.

The communication device is the second UE: the processor is configured to perform the method shown in any of Fig. 8 to Fig. 11.

In one implementation, the processor may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor may store a computer program 1703 that runs on the processor and enables the communication device to perform the method described in the above method embodiments. The computer program may be fixed in the processor, in which case the processor may be implemented by hardware.

In one implementation, the communication device may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be the network device, but the scope of the communication device described in this disclosure is not limited to this. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

For the communication device that can be a chip or chip system, the chip includes processors and interfaces. The number of processors can be one or more, and the number of interfaces can be multiple.

Optionally, the chip also includes a memory for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium, storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented by software, hardware, firmware, or any combination thereof. When implemented using software, it can be fully or partially implemented in the form of a computer program product. The computer program product includes one or more computer programs. When loading and executing the computer program on a computer, all or part of the process or function described in the embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

After considering the specification and practicing the disclosure disclosed herein, those skilled in the art will easily think of other embodiments of the present disclosure. This disclosure is intended to cover any variations, purposes, or adaptive changes of the present disclosure. These variations, purposes, or adaptive changes follow general principles of the present disclosure and include common knowledge or conventional technical means in the technical field not disclosed in the present disclosure. The description and the embodiments are only regarded as exemplary, and the true scope and spirit of the present disclosure are pointed out by the following claims.

It should be understood that the present disclosure is not limited to the precise structure that has been described above and illustrated in the drawings, and various modifications and changes can be made without departing from its scope. The scope of the present disclosure is only limited by the appended claims.

## Claims

1. A positioning method, performed by a first user equipment (UE), comprising:
receiving a first Ranging/SL Positioning request, wherein the first Ranging/SL Positioning request comprises an identifier of the first UE, an identifier of a second UE and a Ranging/SL Positioning parameter;
discovering the second UE based on the identifier of the second UE; and
initiating Ranging/SL Positioning to the second UE based on the first Ranging/SL Positioning request, after passing privacy checking.

2. The method of claim 1, further comprising:
in case that the first UE is a target UE, checking whether a target UE privacy event is triggered;
if triggered, determining that the first Ranging/SL Positioning request does not pass target UE privacy checking;
if not triggered, determining that the first Ranging/SL Positioning request passes the target UE privacy checking.

3. The method of claim 2, further comprising:
feeding back a privacy checking result corresponding to the target UE privacy checking to the second UE.

4. The method of claim 2, after determining that the first Ranging/SL Positioning request passes the target UE privacy checking, further comprising:
initiating a reference UE privacy checking for the first Ranging/SL Positioning request, wherein if the first Ranging/SL Positioning request passes both the target UE privacy checking and the reference UE privacy checking, determining passing the privacy checking, and if the first Ranging/SL Positioning request does not pass any of the target UE privacy checking or the reference UE privacy checking, determining not passing the privacy checking.

5. The method of claim 1, further comprising:
in case that the first UE is a reference UE, sending a second Ranging/SL Positioning request to the second UE;
receiving a privacy checking result fed back by the second UE;
if the privacy checking result shows that a target UE privacy event for the second Ranging/SL Positioning request is triggered, determining not passing the privacy checking;
if the privacy checking result shows that a target UE privacy event for the second Ranging/SL Positioning request is not triggered, determining passing the privacy checking.

6. The method of claim 2 or 5, further comprising:
if not passing the privacy checking, rejecting the first Ranging/SL Positioning request.

7. The method of claim 5, before sending the second Ranging/SL Positioning request to the second UE, further comprising:
checking whether a reference UE privacy event for the first Ranging/SL Positioning request is triggered, and determining not passing the privacy checking in case that the reference UE privacy event is triggered.

8. The method of claim 2 or 5, wherein the target UE privacy event comprises at least one of:
whether a UE is allowed to perform Ranging/SL Positioning as a SL reference UE;
whether a UE is allowed to perform Ranging/SL Positioning as a SL positioning server UE;
whether a UE is allowed to request a Ranging/SL Positioning result to the target UE as a SL positioning client UE.

9. The method of claim 4 or 7, wherein the reference UE privacy event comprises at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

10. The method of claim 1, further comprising:
determining a SL positioning server UE through negotiation with the second UE.

11. The method of claim 10, wherein determining the SL positioning server UE through negotiation with the second UE comprises:
if the first UE or the second UE supports at least one SL positioning server function, determining the first UE or the second UE as the SL positioning server UE;
if neither the first UE nor the second UE supports any SL positioning server function, selecting a device other than the first UE and the second UE as the SL positioning server UE.

12. The method of claim 11, wherein selecting the device other than the first UE and the second UE as the SL positioning server UE comprises:
determining at least one candidate SL positioning server UE;
obtaining a positioning server privacy event for the at least one candidate SL positioning server UE;
selecting the SL positioning server UE from the at least one candidate SL positioning server UE based on the positioning server privacy event for the at least one candidate SL positioning server UE.

13. The method of claim 11, wherein the SL positioning server function comprises at least one of:
coordination and scheduling of resources required for Ranging/SL Positioning;
determining types and a numeric count of Ranging/SL Positioning methods;
calculating a Ranging/SL Positioning result.

14. The method of claim 12, wherein the positioning server privacy event comprises at least one of:
whether a UE is allowed to perform Ranging/SL Positioning as the SL positioning server UE.

15. A positioning method, performed by a second UE, comprising:
receiving a first Ranging/SL Positioning request, wherein the first Ranging/SL Positioning request comprises an identifier of a first UE, an identifier of the second UE and a Ranging/SL Positioning parameter;
discovering the first UE based on the identifier of the first UE; and
initiating Ranging/SL Positioning to the first UE based on the first Ranging/SL Positioning request, after passing privacy checking.

16. The method of claim 15, further comprising:
in case that the second UE is a target UE, checking whether a target UE privacy event is triggered;
if triggered, determining that the first Ranging/SL Positioning request does not pass target UE privacy checking;
if not triggered, determining that the first Ranging/SL Positioning request passes the target UE privacy checking.

17. The method of claim 16, further comprising:
feeding back a privacy checking result corresponding to the target UE privacy checking to the first UE.

18. The method of claim 16, after determining that the first Ranging/SL Positioning request passes the target UE privacy checking, further comprising:
initiating a reference UE privacy checking for the first Ranging/SL Positioning request, wherein if the first Ranging/SL Positioning request passes both the target UE privacy checking and the reference UE privacy checking, determining passing the privacy checking, and if the first Ranging/SL Positioning request does not pass any of the target UE privacy checking or the reference UE privacy checking, determining not passing the privacy checking.

19. The method of claim 15, further comprising:
in case that the second UE is a reference UE, sending a second Ranging/SL Positioning request to the first UE;
receiving a privacy checking result fed back by the first UE;
if the privacy checking result shows that a target UE privacy event for the second Ranging/SL Positioning request is triggered, determining not passing the privacy checking;
if the privacy checking result shows that a target UE privacy event for the second Ranging/SL Positioning request is not triggered, determining passing the privacy checking.

20. The method of claim 16 or 19, further comprising:
if not passing the privacy checking, rejecting the first Ranging/SL Positioning request.

21. The method of claim 19, before sending the second Ranging/SL Positioning request to the first UE, further comprising:
checking whether a reference UE privacy event for the first Ranging/SL Positioning request is triggered, and determining not passing the privacy checking in case that the reference UE privacy event is triggered.

22. The method of claim 16 or 19, wherein the target UE privacy event comprises at least one of:
whether a UE is allowed to perform Ranging/SL Positioning as a SL reference UE;
whether a UE is allowed to perform Ranging/SL Positioning as a SL positioning server UE;
whether a UE is allowed to request a Ranging/SL Positioning result to the target UE as a SL positioning client UE.

23. The method of claim 18 or 20, wherein the reference UE privacy event comprises at least one of:
whether a UE is allowed to perform Ranging/SL Positioning as a target UE;
whether a UE is allowed to perform Ranging/SL Positioning as a SL positioning server UE;
whether a UE is allowed to request a Ranging/SL Positioning result to the reference UE as a SL positioning client UE.

24. The method of claim 15, further comprising:
determining a SL positioning server UE through negotiation with the first UE.

25. The method of claim 24, wherein determining the SL positioning server UE through negotiation with the first UE comprises:
if the first UE or the second UE supports at least one SL positioning server function, determining the first UE or the second UE as the SL positioning server UE;
if neither the first UE nor the second UE supports any SL positioning server function, selecting a device other than the first UE and the second UE as the SL positioning server UE.

26. The method of claim 25, wherein selecting the device other than the first UE and the second UE as the SL positioning server UE comprises:
determining at least one candidate SL positioning server UE;
obtaining a positioning server privacy event for the at least one candidate SL positioning server UE;
selecting the SL positioning server UE from the at least one candidate SL positioning server UE based on the positioning server privacy event for the at least one candidate SL positioning server UE.

27. The method of claim 25, wherein the SL positioning server function comprises at least one of:
coordination and scheduling of resources required for Ranging/SL Positioning;
determining types and a numeric count of Ranging/SL Positioning methods;
calculating a Ranging/SL Positioning result.

28. The method of claim 26, wherein the positioning server privacy event comprises at least one of:
whether a UE is allowed to perform Ranging/SL Positioning as the SL positioning server UE.

29. A positioning device, arranged on a first UE side, comprising:
a transceiver module, configured to receive a first Ranging/SL Positioning request, wherein the first Ranging/SL Positioning request comprises an identifier of the first UE, an identifier of a second UE, and a Ranging/SL Positioning parameter;
a processing module, configured to discover the second UE based on the identifier of the second UE;
the processing module is further configured to initiate Ranging/SL Positioning to the second UE based on the first Ranging/SL Positioning request, after passing privacy checking.

30. A positioning device, arranged on a second UE side, comprising:
a transceiver module, configured to receive a first Ranging/SL Positioning request, wherein the first Ranging/SL Positioning request comprises an identifier of a first UE, an identifier of the second UE, and a Ranging/SL Positioning parameter;
a processing module, configured to discover the first UE based on the identifier of the first UE;
the processing module is further configured to initiate Ranging/SL Positioning to the first UE based on the first Ranging/SL Positioning request, after passing privacy checking.

31. The method of claim 30, wherein the transceiver module is further configured to:
feed back a privacy checking result corresponding to a target UE privacy checking to the first UE.

32. A first UE, comprising a processor and a memory, wherein the memory stores a computer program, the processor is configured to execute the computer program stored in the memory to cause the first UE to perform the method according to any of claims 1-14.

33. A second UE, comprising a processor and a memory, wherein the memory stores a computer program, the processor is configured to execute the computer program stored in the memory to cause the second UE to perform the method according to any of claims 15-28.

34. A positioning system, comprising:
a first UE, configured to perform the method according to any of claims 1-14; and
a second UE, configured to perform the method according to any of claims 15-28.

35. A communication device, comprising a processor and an interface circuit, wherein
the interface circuit is configured to receive code instructions and transmit the code instructions to the processor; the processor is configured to run the code instructions to perform the method according to any of claims 1-14 or claims 15-28.

36. A computer readable storage medium, stored with instructions which, when executed, cause the method of any of claims 1-14 or claims 15-28 to be implemented.
